# EUROPÄISCHE PATENTSCHRIFT

(11) **EP 3 722 193 B1**
(45) Veröffentlichungstag und Bekanntmachung des Hinweises auf die Patenterteilung: **09.06.2021**
(21) Anmeldenummer: 19168972.8
(22) Anmeldetag: 12.04.2019
(51) Int. Cl.: B62M 6/45, F16D 41/08, F16D 41/10, F16D 43/26

(54) **TORQUETRANSISTOR UND E-BIKE MIT TORQUETRANSISTOR**
TORQUE TRANSISTOR AND E-BIKE WITH TORQUE TRANSISTOR
TRANSISTOR TORQUE ET VÉLO ÉLECTRIQUE POURVU DE TRANSISTOR TORQUE

(43) Veröffentlichungstag der Anmeldung: 14.10.2020
(73) Patentinhaber: maxon international ag, 6072 Sachseln (CH)
(72) Erfinder: von Lehmann, Ernst, 79286 Glottertal (DE)
(74) Vertreter: Grünecker Patent- und Rechtsanwälte PartG mbB

(56) Entgegenhaltungen:
- EP-A1- 0 700 826
- EP-A1- 3 254 945

## Beschreibung

Die vorliegende Erfindung betrifft eine Drehmomentübertragungsanordnung für den Antriebsstrang eines muskelkraftbetriebenen Fahrzeugs mit Hilfsmotor gemäß dem Oberbegriff des unabhängigen Anspruchs 1. Im Rahmen der vorliegenden Anmeldung erfasst der Begriff "muskelkraftbetriebenes Fahrzeug" im Prinzip alle Arten muskelkraftbetriebener Fahrzeuge, insbesondere Wasserfahrzeuge wie Tretboote oder dergleichen. Die vorliegende Erfindung eignet sich jedoch ganz besonders für E-Bikes bzw. Pedelecs mit Mittelmotor bzw. Tretlagermotor.

Eine gattungsgemäße Drehmomentübertragungsanordnung nach dem Oberbegriff des unabhängigen Anspruchs 1 umfasst eine Abtriebswelle, eine erste Eingangswelle zur Übertragung eines mittels Muskelkraft erzeugten Drehmoments auf die Abtriebswelle, eine zweite Eingangswelle zur Übertragung eines durch den Hilfsmotor erzeugten Drehmoments auf die Abtriebswelle, und eine Freilauffunktion, durch die verhindert wird, dass ein Benutzer des muskelkraftbetriebenen Fahrzeugs den Hilfsmotor mitdrehen muss, wenn der Hilfsmotor ausgeschaltet bzw. nicht zugeschaltet ist.

Gattungsgemäße Drehmomentübertragungsanordnungen sind aus dem Stand der Technik bekannt und kommen beispielsweise bei E-Bikes mit Mittelmotor zum Einsatz. Bei den aus dem Stand der Technik bekannten Lösungen erfassen elektrische Sensoren, ob der Fahrradfahrer Druck zum Vorwärtsbewegen des Fahrrads auf die Pedale ausübt. Falls dieser Druck auf die Pedale erfolgt, wird der Hilfsmotor zugeschaltet, um den Fahrradfahrer zu unterstützen. Wenn der Fahrradfahrer keinen Druck mehr auf die Pedale ausübt, oder die Pedale in die entgegengesetzte Richtung dreht, wird dies ebenfalls durch elektrische Sensoren erfasst und die Unterstützung des Hilfsmotors wird reduziert oder ausgeschaltet. Elektrische Systeme sind Fehler- und Störungsanfällig und müssen deshalb insbesondere im sicherheitsrelevanten Bereich redundant ausgelegt werden, damit bspw. ein sicheres Abbremsen des Fahrrades auch im Falle einer Sensorstörung möglich ist. Ferner ist die Abtriebswelle, welche das Kettenblatt trägt, in der Regel fest mit der ersten Eingangswelle verbunden oder sie wird durch die erste Eingangswelle gebildet. Die zweite Eingangswelle ist in der Regel ebenfalls fest mit der Abtriebswelle verbunden. Die Freilauffunktion wird für gewöhnlich durch einen Freilauf realisiert, welcher im Hilfsmotor selbst oder einem zwischen Hilfsmotor und Abtriebswelle angeordneten Getriebe verbaut ist. Um zu verhindern, dass der Hilfsmotor beim Rückwärtstreten mitgedreht bzw. zurückgedreht werden muss, ist es bei den aus dem Stand der Technik bekannten Lösungen notwendig, zusätzlich zu dem ersten Freilauf einen weiteren Freilauf zu verbauen.

Die EP 3 254 945 A1 offenbart eine Antriebseinheit für ein Fahrrad mit Hilfsmotor mit einer Tretkurbel, einer Abtriebswelle und einem mit der Abtriebswelle verbundenen, von einem Elektromotor angetriebenen, Antriebselement, eine Drehmomenterfassungseinheit sowie mit einer Steuerung. Die EP 700 826 A1 beschreibt ein weiteres Verfahren zum Steuern des Elektromotors eines Fahrrads mit Hilfsmotor, wobei der Hilfsmotor entsprechend der Zunahme der von einem Drehmomentsensor erfassten mittels Muskelkraft erzeugten Drehmoments gesteuert wird.

Die vorliegende Erfindung hat sich zur Aufgabe gestellt, die gattungsgemäße Drehmomentübertragungsanordnung derart weiterzubilden, dass sich eine besonders kompakte und kostengünstige Bauweise ergibt und gleichzeitig beide der oben erwähnten Freilauffunktionen gewährleistet werden können. Ferner soll ein zuverlässiges Ausschalten der Unterstützungsleistung des Hilfsmotors gewährleistet werden.

Die Aufgabe wird gelöst durch die Merkmale des unabhängigen Anspruchs 1. Demnach liegt bei einer Drehmomentübertragungsanordnung gemäß dem Oberbegriff des unabhängigen Anspruchs 1 dann eine erfindungsgemäße Lösung der Aufgabe vor, wenn die Drehmomentübertragungsanordnung eine mechanische Kupplung aufweist, die dazu ausgebildet ist, ein Drehmoment von der zweiten Eingangswelle auf die Abtriebswelle zu übertragen, wenn an der ersten Eingangswelle ein in einer Antriebsdrehrichtung auf die Abtriebswelle wirkendes Drehmoment anliegt, und kein Drehmoment von der zweiten Eingangswelle auf die Abtriebswelle zu übertragen, wenn an der ersten Eingangswelle ein auf die Abtriebswelle wirkendes Drehmoment entgegen der Antriebsdrehrichtung anliegt.

Vorteilhafte Ausführungsformen der vorliegenden Erfindung sind Gegenstand der Unteransprüche.

In der Ausführungsform der vorliegenden Erfindung ist die Kupplung eine mechanische Kupplung, welche ohne elektrische Energieversorgung betreibbar ist. Vorzugsweise ist die mechanische Kupplung nach Art einer Klemmsperre ausgeführt. Eine mechanische Kupplung weist gegenüber elektrischen Systemen eine höhere Zuverlässigkeit auf. Bei elektrischen Systemen besteht das Risiko, dass bspw. eine Batterie oder Akku leer ist und dadurch das System ausfällt. Ferner können Kabelbrüche bei Sensor oder Versorgungsleitungen zu Systemausfällen führen. Insbesondere bei Fahrzeugen, welche meist im Außenbereich eingesetzt werden, stellt dies eine große Herausforderung dar, da diese auch bei unterschiedlichen Temperaturen und bspw. Schnee und Regen über Jahre einwandfrei funktionieren müssen. Elektrische Systeme im Sicherheits- und Fahrzeugbereich müssen deshalb doppelt oder gar dreifach redundant ausgestaltet sein.

Gemäß einer weiteren besonders bevorzugten Ausführungsform der vorliegenden Erfindung ist vorgesehen, dass die Abtriebswelle, die erste Eingangswelle, und die zweite Eingangswelle koaxial zueinander angeordnet und grundsätzlich gegeneinander drehbar gelagert sind, wobei zwischen der ersten Eingangswelle und der Abtriebswelle ein spielbehafteter mitnehmender Eingriff besteht, welcher im Rahmen eines gewissen Umfangsspiels eine relative Drehung zwischen erster Eingangswelle und Abtriebswelle erlaubt, wobei zumindest ein Klemmelement nach Art einer Klemmsperre derart zwischen der zweiten Eingangswelle und der Abtriebswelle angeordnet ist, dass sich das Klemmelement jedenfalls dann in einer gelösten Stellung befindet oder in die gelöste Stellung gebracht wird, wenn die Abtriebswelle durch die erste Eingangswelle in einer Antriebsdrehrichtung gedreht wird und sich die zweite Eingangswelle entweder nicht dreht oder sich langsamer in Antriebsdrehrichtung dreht als Abtriebswelle und erste Eingangswelle, wobei das Klemmelement durch eine Relativdrehung zwischen Abtriebswelle und zweiter Eingangswelle aus der gelösten Stellung in eine Sperrstellung überführt wird, wenn sich die zweite Eingangswelle kurzzeitig schneller in Antriebsdrehrichtung dreht als die Abtriebswelle, so dass ein mitnehmender Eingriff zwischen zweiter Eingangswelle und Abtriebswelle hergestellt wird, wobei das Klemmelement jedenfalls in der Sperrstellung verbleibt, solange sowohl über die erste Eingangswelle als auch über die zweite Eingangswelle ein in Antriebsdrehrichtung wirkendes Drehmoment auf die Abtriebswelle übertragen wird, und wobei die erste Eingangswelle ein Entsperrelement aufweist, welches das Klemmelement jedenfalls dann aktiv aus der Sperrstellung in die gelöste Stellung bewegt, wenn sich die erste Eingangswelle im Rahmen des zwischen erster Eingangswelle und Abtriebswelle bestehenden Umfangsspiels relativ zur Abtriebswelle betrachtet entgegen der Antriebsdrehrichtung dreht. Die erfindungsgemäß vorgesehene Kupplung ist somit geschlossen, wenn sich das Klemmelement in der Sperrstellung befindet. Sobald sich das Sperrelement in der gelösten Stellung befindet, ist die erfindungsgemäß vorgesehene Kupplung geöffnet.

Diese Ausführungsform hat den Vorteil, dass die beiden oben erläuterten Freilauffunktionen in einer einzigen Funktionseinheit integriert sind. Ein weiterer Vorteil ist, dass das über das Klemmelement zu übertragende Drehmoment auf das maximale Drehmoment des Hilfsmotors beschränkt ist. Bei Verwendung zweier separater Freiläufe müsste einer der beiden Freiläufe hingegen auf das maximale Drehmoment ausgelegt werden, das der Benutzer des muskelkraftbetriebenen Fahrzeugs auf die Abtriebswelle ausübt. Die besonders bevorzugte Ausführungsform erlaubt somit insgesamt eine sehr kompakte und leichte Bauweise.

Gemäß der oben erläuterten besonders bevorzugten Ausführungsform sind die Abtriebswelle, die erste Eingangswelle und die zweite Eingangswelle koaxial zueinander angeordnet. Sofern nicht anders angegeben, beziehen sich im Folgenden Angaben wie "in Umfangsrichtung" usw. auf die gemeinsame geometrische Achse von Abtriebswelle, erster Eingangswelle und zweiter Eingangswelle.

Gemäß einer weiteren besonders bevorzugten Ausführungsform der vorliegenden Erfindung ist das Klemmelement ein Wälzkörper, der zwischen einer ersten Klemmfläche der Abtriebswelle und einer zweiten Klemmfläche der zweiten Eingangswelle angeordnet ist, wobei sich der Abstand zwischen erster Klemmfläche und zweiter Klemmfläche in Umfangsrichtung betrachtet derart verringert, dass in der Sperrstellung des Klemmelements Selbsthemmung zwischen dem Klemmelement und der ersten Klemmfläche sowie der zweiten Klemmfläche besteht. Das als Wälzkörper ausgeführte Klemmelement kann sich in der gelösten Stellung frei drehen, wird aber bei einer Relativdrehung zwischen Abtriebswelle und zweiter Eingangswelle, bei welcher sich die zweite Eingangswelle schneller in Antriebsdrehrichtung dreht als die Abtriebswelle, durch die zweite Klemmfläche der zweiten Eingangswelle erfasst und mitgenommen und rollt dadurch in Umfangsrichtung entlang der ersten Klemmfläche in die Sperrstellung, in welcher die oben erwähnte Selbsthemmung eintritt. Bei einer Relativdrehung in umgekehrter Richtung wird die Selbsthemmung auf einfache Weise wieder aufgehoben.

Besonders bevorzugt handelt es sich bei dem Klemmelement dabei um eine Klemmrolle. Klemmrollen mit zylindrischer Form lassen sich einfach herstellen und erlauben die Übertragung hoher Drehmomente bei gleichzeitig kompakter Bauweise. Das Klemmelement kann alternativ beispielsweise auch kegelförmig ausgestaltet sein. Das Klemmelement kann bei einem Schnitt senkrecht zur Längsachse des Klemmelementes einen kreisförmigen Querschnitt aufweisen. Gemäß einer bevorzugten Ausführungsform weist das Klemmelement jedoch einen kreisförmigen Querschnitt mit mindestens einer Ausbuchtung auf. Besonders bevorzugt weist das Klemmelement einen kreisförmigen Querschnitt mit zwei Ausbuchtungen auf. Die Ausbuchtung stellt eine Nockenfläche dar, welche die Kraftübertragung zwischen der zweiten Eingangswelle und der Abtriebswelle optimiert. Insbesondere wenn zwei Ausbuchtungen vorgesehen sind, ergibt sich im Bereich zwischen den Ausbuchtungen eine Fläche, welche die Kraftübertragung zwischen der zweiten Eingangswelle und der Abtriebswelle optimiert. Ferner wird durch die Ausbuchtung die Positionierung des Klemmelementes verbessert.

Weiter bevorzugt liegt eine Rotationsachse des Klemmelements parallel zu einer gemeinsamen Achse von Abtriebswelle, erster Eingangswelle und zweiter Eingangswelle.

Gemäß einer weiteren bevorzugten Ausführungsform der vorliegenden Erfindung sind die erste Klemmfläche und die zweite Klemmfläche durch Kegelflächen gebildet, wobei ein mittlerer Radius der zweiten Klemmfläche über den vollen Umfang der zweiten Eingangswelle konstant ist, und wobei ein mittlerer Radius der ersten Klemmfläche in Umfangsrichtung betrachtet variiert. Diese Ausführungsform trägt ebenfalls zu einer kompakten Bauweise sowie zu einer sicheren Funktion des Klemmmechanismus bei.

Gemäß einer weiteren bevorzugten Ausführungsform der vorliegenden Erfindung ist das Klemmelement in einer ersten Ausnehmung der Abtriebswelle aufgenommen, wobei die erste Klemmfläche durch eine Teilfläche der ersten Ausnehmung gebildet ist. Diese Ausführungsform trägt zu einem einfachen Aufbau der erfindungsgemäßen Drehmomentübertragungsanordnung bei und erlaubt eine einfache Positionierung des Klemmelements.

Dabei ist es von besonderem Vorteil, wenn in Umfangsrichtung betrachtet im Anschluss an die erste Ausnehmung eine zweite Ausnehmung in der Abtriebswelle ausgebildet ist, wobei das Entsperrelement der ersten Eingangswelle ein Zapfen ist, der in die zweite Ausnehmung eingreift, wobei in Antriebsdrehrichtung durch den Eingriff zwischen Zapfen und zweiter Ausnehmung der mitnehmende Eingriff zwischen erster Eingangswelle und Abtriebswelle hergestellt wird, und wobei das Umfangsspiel zwischen der ersten Eingangswelle und der Abtriebswelle dadurch gegeben ist, dass eine in Umfangsrichtung betrachtete kombinierte Ausdehnung von erster Ausnehmung und zweiter Ausnehmung größer ist als eine in Umfangsrichtung betrachtete kombinierte Ausdehnung des Klemmelements und des Zapfens. Diese Ausführungsform trägt zu einer besonders kompakten und einfachen Bauweise bei. Zudem werden bei dieser Ausführungsform besonders wenig Bauteile benötigt. Durch das Umfangsspiel kann eine gewisse Relativbewegung zwischen der ersten Eingangswelle und der Abtriebswelle erzeugt werden. Durch die Relativbewegung lässt sich das Klemmelement in die Sperrstellung, in welcher ein Drehmoment von der zweiten Antriebswelle auf die Abtriebswelle übertragen wird, und in die gelöste Stellung, in welcher kein Drehmoment von der zweiten Eingangselle auf die Abtriebswelle übertragen wird, bewegen.

Gemäß einer weiteren besonders bevorzugten Ausführungsform der vorliegenden Erfindung umschließt die zweite Eingangswelle die Abtriebswelle koaxial. Diese Ausführungsform trägt ebenfalls zu einer kompakten Bauweise bei. Dabei ist es von besonderem Vorteil, wenn die zweite Eingangswelle als Tellerrad ausgeführt ist. Das Tellerrad kann auf einfache Weise angetrieben werden, indem ein Ritzel der Motorwelle in eine entsprechende Verzahnung des Tellerrads eingreift.

Gemäß einer weiteren bevorzugten Ausführungsform der vorliegenden Erfindung erstreckt sich die erste Eingangswelle durch die Abtriebswelle hindurch. Auch diese Ausführungsform trägt zu einer kompakten Bauweise bei.

In einer weiteren besonders bevorzugten Ausführungsform der vorliegenden Erfindung weist die Drehmomentübertragungsanordnung mehrere Klemmelemente auf, die in Umfangsrichtung verteilt angeordnet sind. Durch die Vielzahl an Klemmelementen können besonders hohe Drehmomente über die Klemmelemente übertragen werden. Vorteilhafter Weise sind genauso viele Entsperrelemente bzw. Zapfen vorgesehen wie Klemmelemente. Ganz besonders bevorzugt sind sowohl die Klemmelemente als auch die Entsperrelemente gleichmäßig in Umfangsrichtung verteilt angeordnet. Dadurch ergibt sich eine besonders vorteilhafte Kraftübertragung. Es wird dadurch auch eine hohe Lebensdauer erreicht.

In einer weiteren bevorzugten Ausführungsform der vorliegenden Erfindung weist die Klemmsperre ein ringförmiges Spannelement auf, welches dazu ausgebildet ist, die Klemmelemente bei der Überführung in die Sperrstellung zu unterstützen. Das Spannelement kann beispielsweise aus einem elastischen Material wie beispielsweise Gummi oder Kautschuk bestehen. Das Spannelement kann aber auch eine Wurmfeder sein, welche aus fein spiralisiertem Draht besteht, wobei der Draht durch die Spiralisierung elastisch ist. Das Spannelement unterstützt die Klemmelemente bei der Überführung in die Sperrstellung, in welcher ein Drehmoment von der zweiten Eingangswelle auf die Abtriebswelle übertragen wird. Durch das Spannelement welches als elastisches Element bzw. Feder dient, wird auf die Klemmelemente eine Kraft bzw. ein Drehmoment ausgeübt. Das Drehmoment unterstützt die Klemmkörper bei ihrer Bewegung in die Sperrstellung. Da die Klemmelemente bei dieser Ausführungsform durch das Spannelement in die Sperrstellung vorgespannt sind, reicht die geringste relative Bewegung zwischen der zweiten Eingangswelle und der Abtriebswelle aus, um einen Kraftschluss zwischen zweiter Eingangswelle und Abtriebswelle herzustellen. Durch das Spannelement kann sichergestellt werden, dass alle Klemmelemente in die Sperrstellung überführt werden. Dies ist insbesondere deshalb von Vorteil, da das für die Schmierung notwendige Fett dazu führen kann, dass die Klemmelemente trotz Relativbewegung zwischen der zweiten Eingangswelle und der Abtriebswelle in der gelösten Stellung haften bleiben und nicht in die Sperrstellung überführt werden bzw. nicht in die Sperrstellung rollen oder gleiten. Das Spannelement liegt vorzugsweise mit seinem Innenumfang unter Spannung an den Klemmelementen an. Es kann jedoch auch vorgesehen sein, dass das Spannelement mit seinem Außenumfang unter Spannung an den Klemmelementen anliegt. In beiden Fällen weisen die Klemmelemente weiter vorzugsweise eine Auflagefläche auf, die in Bezug auf eine Achse des jeweiligen Klemmelements nicht kreiszylindrisch ist sondern eine Nockenfläche bildet, an welcher das Spannelement derart anliegt, dass durch das Zusammenwirken von Spannelement und Nockenfläche ein Drehmoment auf das Klemmelement ausgeübt wird. Weiter vorzugsweise ist die Auflagefläche an einem axial von einem Grundkörper des Klemmelements abstehenden Vorsprung ausgebildet. Die Auflagefläche verläuft weiter vorzugsweise durch die Achse des Klemmelements.

Die vorliegende Erfindung stellt auch ein Fahrrad mit einem Hilfsmotor und einer erfindungsgemäßen Drehmomentübertragungsanordnung bereit, wobei der Hilfsmotor als Mittelmotor ausgeführt und mit der zweiten Eingangswelle gekoppelt ist.

Ausführungsbeispiele der vorliegenden Erfindung werden im Folgenden anhand von Zeichnungen näher erläutert.

Es zeigen:
- Figur 1:: eine teilweise geschnitten dargestellte Ansicht des Tretlagerbereichs eines E-Bikes mit einer erfindungsgemäßen Drehmomentübertragungseinrichtung gemäß einem ersten Ausführungsbeispiel,
- Figur 2:: einen Querschnitt durch die erfindungsgemäße Drehmomentübertragungseinrichtung aus Figur 1 auf axialer Position der Klemmelemente und Entsperrelemente,
- Figur 3:: den Querschnitt aus Figur 2 bei abgeschaltetem Hilfsmotor und vorwärts gerichteter Betätigung der Pedale durch den Benutzer des E-Bikes,
- Figur 4:: den Querschnitt aus Figur 2 bei einsetzender Unterstützung durch den Hilfsmotor,
- Figur 5:: den Querschnitt aus Figur 2 bei laufender Unterstützung des Benutzers des E-Bikes durch den Hilfsmotor,
- Figur 6:: den Querschnitt aus Figur 2 im Moment des Aussetzens der Pedalbewegung,
- Figur 7:: den Querschnitt aus Figur 2 bei rückwärts gerichteter Betätigung der Pedale durch den Benutzer des E-Bikes und abgeschaltetem Hilfsantrieb,
- Figur 8:: den Querschnitt aus Figur 2 bei rückwärts gerichteter Betätigung der Pedale durch den Benutzer des E-Bikes und einer vorwärts gerichteten Drehung der zweiten Eingangswelle aufgrund einer Aktivierung des Hilfsantriebs,
- Figur 9:: den Querschnitt aus Figur 2 beim Zurückschieben des E-Bikes,
- Figur 10:: einen Querschnitt durch ein weiteres Ausführungsbeispiel der erfindungsgemäßen Drehmomentübertragungseinrichtung mit einem Spannelement,
- Figur 11:: ein Klemmelement der erfindungsgemäßen Drehmomentübertragungseinrichtung aus Figur 10 in einer Detailansicht auf das Stirnende des Klemmelements, und
- Figur 12:: eine perspektivische Ansicht des Klemmelements aus Figur 11.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

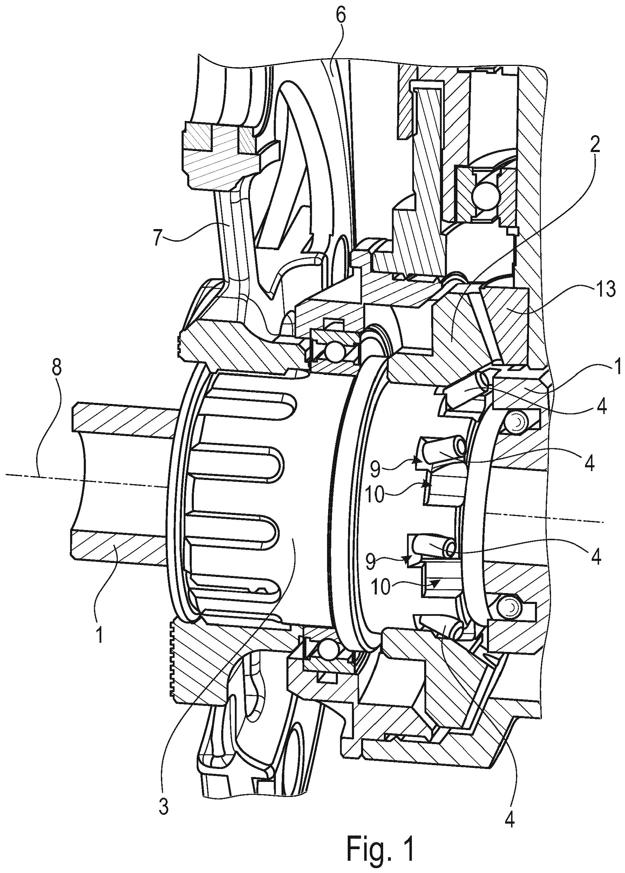

Figur 1 zeigt eine teilweise geschnittene perspektivische Ansicht des Tretlagerbereichs eines E-Bikes mit einer erfindungsgemäßen Drehmomentübertragungsanordnung gemäß einem ersten Ausführungsbeispiel. Die Tretlagerwelle 1, an der die nicht dargestellten Pedale des E-Bikes befestigt sind, bildet eine erste Eingangswelle der erfindungsgemäßen Drehmomentübertragungsanordnung. Die erste Eingangswelle 1 erstreckt sich durch die hohlzylindrische Abtriebswelle 3 der Drehmomentübertragungsanordnung hindurch. Die hohlzylindrische Abtriebswelle 3wiederum trägt den Kettenblattträger 7, an welchem das Kettenblatt 6 befestigt ist. Über die nicht dargestellte Kette wird das an der Abtriebswelle 3 anliegende Antriebsdrehmoment auf das Hinterrad des E-Bike übertragen. Die erfindungsgemäße Drehmomentübertragungsanordnung umfasst ferner eine zweite Eingangswelle 2, die ebenfalls hohl ausgeführt ist und die Abtriebswelle 3 radial umschließt. Die zweite Eingangswelle 2 ist als Tellerrad ausgeführt. Sie weist daher eine kegelförmige Verzahnungsfläche auf, in die das Ritzel 13 der Abtriebswelle des elektrischen Hilfsmotors des E-Bike eingreift. Die zweite Eingangswelle 2 wird somit ausschließlich über den nicht weiter dargestellten Hilfsantrieb angetrieben. Alle drei Wellen, die Abtriebswelle 3, die erste Eingangswelle 1 und die zweite Eingangswelle 2 sind koaxial zueinander angeordnet und grundsätzlich gegeneinander drehbar gelagert. Sie teilen sich die in Figur 1 dargestellte gemeinsame geometrische Achse 8.

Die erfindungsgemäße Drehmomentanordnung ist derart eingerichtet, dass über beide eingangswellen 1 und 2 ein Drehmoment auf die Abtriebswelle 3 übertragen werden kann. Die erfindungsgemäße Drehmomentübertragungsanordnung weist dabei zwei Freilauffunktionen auf, die in einer einzigen Funktionseinheit integriert sind. Die erste Freilauffunktion verhindert, dass ein Benutzer des E-Bikes den Hilfsmotor beim Vorwärtstreten mitdrehen muss, wenn der Hilfsmotor ausgeschaltet bzw. nicht zugeschaltet ist. Die zweite Freilauffunktion stellt sicher, dass der Hilfsmotor nicht entgegen der normalen Drehrichtungen mitgedreht werden muss, wenn der Benutzer des E-Bikes rückwärts in die Pedale tritt, ohne ein Drehmoment auf das Hinterrad zu übertragen. Die Hinterradnabe ist daher ebenfalls mit einem entsprechenden Freilauf ausgerüstet.

Nachfolgend wird die Funktionsweise der erfindungsgemäßen Drehmomentübertragungsanordnung erläutert. Zwischen der Abtriebswelle 3 und der zweiten Eingangswelle 2 sind mehrere zylindrische Klemmrollen 4 angeordnet, welche im Normalbetrieb nach Art einer Klemmsperre eine Drehmomentübertragung von der zweiten Eingangswelle 2 auf die Abtriebswelle 3 gewährleisten. Die Klemmrollen 4 sind gleichmäßig über den Umfang der Abtriebswelle 3 verteilt angeordnet und in entsprechenden Ausnehmungen 9 am Außenumfang der Abtriebswelle 3 aufgenommen. Wie Figur 1 deutlich zeigt, sind die Achsen der Klemmrollen 4 nicht parallel zur Achse 8 der erfindungsgemäßen Drehmomentübertragungsanordnung ausgerichtet. Sie stehen vielmehr in einem schiefen Winkel zur gemeinsamen Achse 8 von Abtriebswelle 3, erster Eingangswelle 1 und zweiter Eingangswelle 2. Die Klemmrollen 4 wirken somit zwischen Klemmflächen der Abtriebswelle 3 und der zweiten Eingangswelle 2, die im Wesentlichen kegelförmig sind.

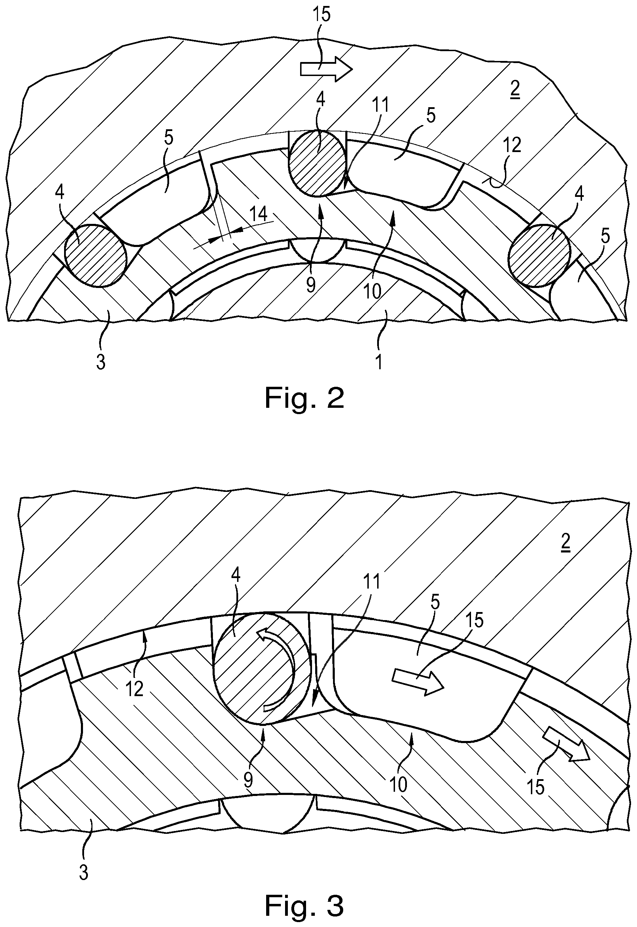

Figur 2 zeigt einen Querschnitt durch die erfindungsgemäße Drehmomentübertragungsanordnung orthogonal zur Achse 8 auf axialer Position der Klemmrollen 4. Die Klemmfläche 12 auf Seiten der zweiten Eingangswelle 2 wird durch eine rotationssymmetrische Kegelfläche gebildet. Die abtriebswellenseitige Klemmfläche 11 wird durch die Grundfläche der Ausnehmung 9 am Außenumfang der Abtriebswelle 3 gebildet. In Figur 2 ist deutlich zu erkennen, dass die Klemmfläche 11 in Umfangsrichtung betrachtet im Uhrzeigersinn bzw. in Antriebsrichtung 15 ansteigt, sodass sich der Abstand zwischen der Klemmfläche 11 und der Klemmfläche 12 in Uhrzeigersinnrichtung reduziert. Ebenfalls in Umfangsrichtung betrachtet ist neben jeder Ausnehmung 9 eine zweite Ausnehmung 10 in der Außenkontur der Abtriebswelle 3 ausgebildet. Zapfenförmige Fortsätze 5 der ersten Eingangswelle 1 greifen, wie in Figur 2 gezeigt, in die zweiten Ausnehmungen 10 ein. Die zapfenförmigen Fortsätze 5 sind in Figur 1 der Übersichtlichkeit halber nicht abgebildet.

Durch den Eingriff der zapfenförmigen Fortsätze 5 in die Ausnehmungen 10 in der Außenkontur der Abtriebswelle 3 besteht zwischen der ersten Eingangswelle 1 und der Abtriebswelle 3 grundsätzlich ein mitnehmender Eingriff. Dies bedeutet, dass sich die Abtriebswelle 3 grundsätzlich mitdreht, wenn die erste Eingangswelle 1 in Antriebsdrehrichtung 15 oder entgegen der Antriebsdrehrichtung gedreht wird. Der mitnehmende Eingriff ist jedoch spielbehaftet. Wie Figur 2 zeigt, ist die in Umfangsrichtung betrachtete kombinierte Ausdehnung von erster Ausnehmung 9 und zweiter Ausnehmung 10 größer als die ebenfalls in Umfangsrichtung betrachtete kombinierte Ausdehnung der Klemmrolle 4 und des daneben angeordneten Zapfens 5. Somit besteht ein in Figur 2 dargestelltes und in Umfangsrichtung wirkendes Spiel 14.

Tritt der Benutzer des E-Bikes vorwärts und demnach in Antriebsdrehrichtung 15 in die Pedale, so dreht sich die erste Eingangswelle 1 in der Darstellung in Figur 3 im Uhrzeigersinn. Die zapfenförmigen Fortsätze 5 der ersten Eingangswelle kommen dabei nach Überwindung des Spiels 14 mit den in der Darstellung jeweils rechts befindlichen Flanken der zweiten Ausnehmungen 10 zur Anlage, so dass die Abtriebswelle 3 mit der ersten Eingangswelle 1 mitgedreht wird. Die Klemmrollen 4 verbleiben dabei in der linken Ecke der zugehörigen ersten Ausnehmung 9 und können frei rotieren, wie es durch den Pfeil in der Klemmrolle 4 in Figur 3 veranschaulicht wird.

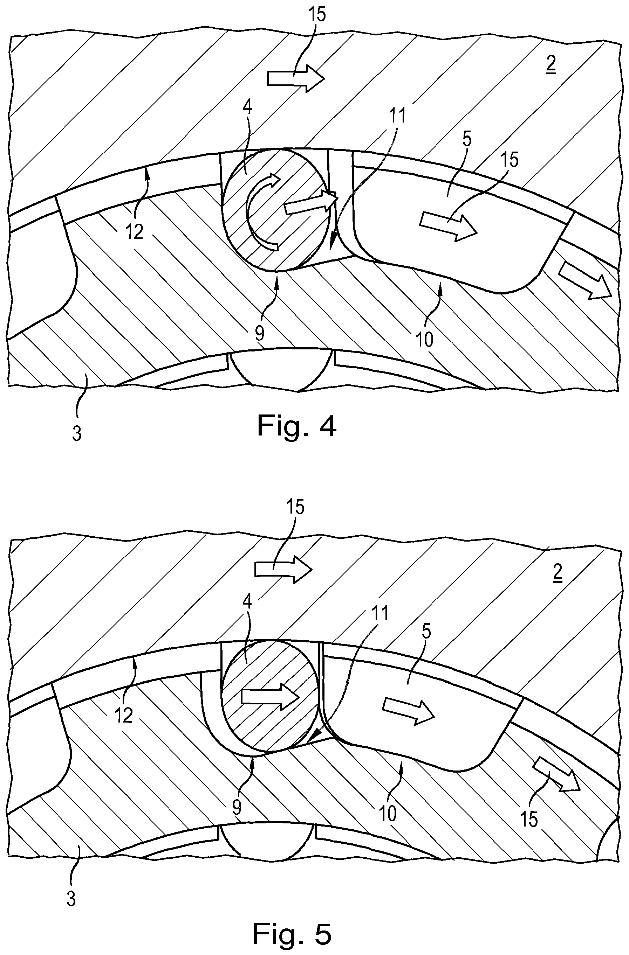

Wird nun der Hilfsmotor zugeschaltet, so dreht sich auch die zweite Eingangswelle 2 im Uhrzeigersinn, wie es in Figur 4 dargestellt ist. Um ein Drehmoment von dem Hilfsmotor auf die Abtriebswelle übertragen zu können, muss die zweite Eingangswelle 2 kurzzeitig schneller drehen als die Abtriebswelle 3. Die Klemmrolle 4 wird durch diese Relativbewegung mitgenommen und rollt auf der ansteigenden Klemmfläche 11 entlang nach rechts, bis sie sich zwischen der Klemmfläche 11 der Abtriebswelle 3 und der Klemmfläche 12 der zweiten Eingangswelle 2 verklemmt und dadurch eine Selbsthemmung eintritt. Dieser Zustand ist in Figur 5 gezeigt. Nun wird sowohl über die erste Eingangswelle 1 als auch über die zweite Eingangswelle 2 ein Drehmoment auf die Abtriebswelle 3 übertragen.

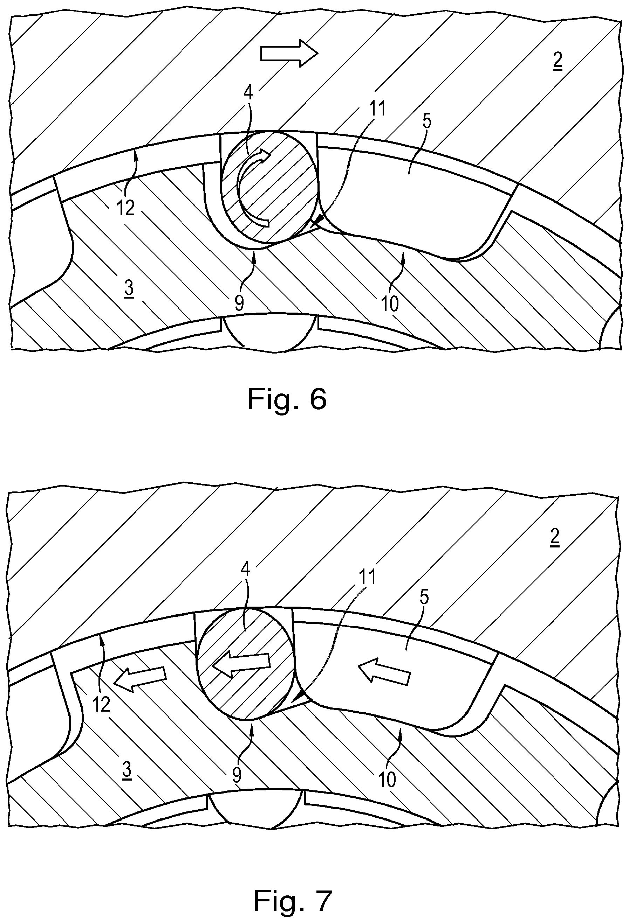

Hält der Benutzer des E-Bike mit den Pedalen gegen das Drehmoment der zweiten Eingangswelle 2, so wird durch die zapfenförmigen Fortsätze 5 eine entgegen dem Uhrzeigersinn wirkende Kraft auf die Klemmrollen 4 ausgeübt. Dieser Zustand ist in Figur 6 dargestellt. Wird die Haftreibung der Klemmrollen überwunden, so fangen diese wieder an, sich zu drehen bzw. zu gleiten. Der Kraftschluss zwischen der zweiten Eingangswelle und der Abtriebswelle ist dann unterbrochen. Die zweite Eingangswelle dreht frei. Dies kann beispielsweise der Fall sein, wenn der Hilfsmotor schneller beschleunigt als es der Fahrer möchte. Das E-Bike kann selbstverständlich über einen entsprechenden Drehmomentsensor verfügen, der in diesem Falle ein negatives Drehmoment messen würde, was zu einer Abschaltung des Hilfsmotor führen würde.

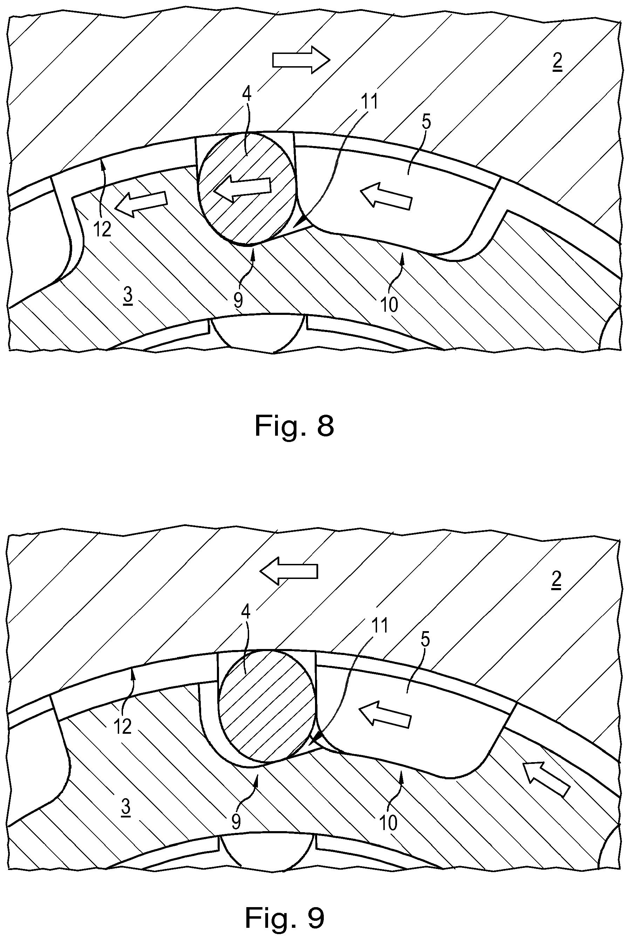

In Figur 7 ist gezeigt, wie sich die erfindungsgemäße Drehmomentübertragungsanordnung verhält, wenn der Fahrer des E-Bike rückwärts in die Pedale tritt. Der zapfenförmige Vorsprung 5 schiebt die Klemmrolle 4 dabei entgegen dem Uhrzeigersinn, bis die Klemmrolle zwischen dem zapfenförmigen Vorsprung 5 und der linken Flanke der ersten Ausnehmung 9 eingeklemmt ist. Das Drehmoment wird nun entgegen dem Uhrzeigersinn von der ersten Eingangswelle bzw. dem zapfenförmigen Vorsprung 5 über die Klemmrolle 4 auf die Abtriebswelle 3 übertragen. Die Abtriebswelle 3 dreht sich mit der ersten Eingangswelle entgegen dem Uhrzeigersinn. Der Kraftschluss zwischen Abtriebswelle und zweiter Eingangswelle ist hingegen aufgehoben, so dass der Hilfsmotor bei dieser Rückwärtsbewegung der Pedale nicht mit gedreht werden muss. Wie Figur 8 zeigt, hat eine Zuschaltung des Hilfsmotors in Antriebsdrehrichtung, welche eine Drehung der zweiten Eingangswelle 2 im Uhrzeigersinn bewirkt, keinerlei Einfluss auf die Klemmrolle 4 und auf die Rückwärtsbewegung der ersten Eingangswelle 1 und der Abtriebswelle 3.

Figur 9 schließlich zeigt das Verhalten beim Zurückschieben des E-Bikes. In diesem Fall dreht sich die Abtriebswelle 3 entgegen dem Uhrzeigersinn und nimmt dabei die zapfenförmigen Fortsätze 5 der ersten Eingangswelle in ihrer Bewegung mit. Durch eine relativ Drehung zwischen Abtriebswelle 3 und zweiter Eingangswelle 2 rollt die Klemmrolle 4 auf der ersten Klemmfläche 11 entlang nach rechts in die Sperrstellung, in welcher Selbsthemmung zwischen der Klemmrolle 4 und der Abtriebswelle 3 sowie der zweiten Eingangswelle 2 eintritt. Beim Zurückschieben des E-Bikes wird der Hilfsmotor daher mitgedreht.

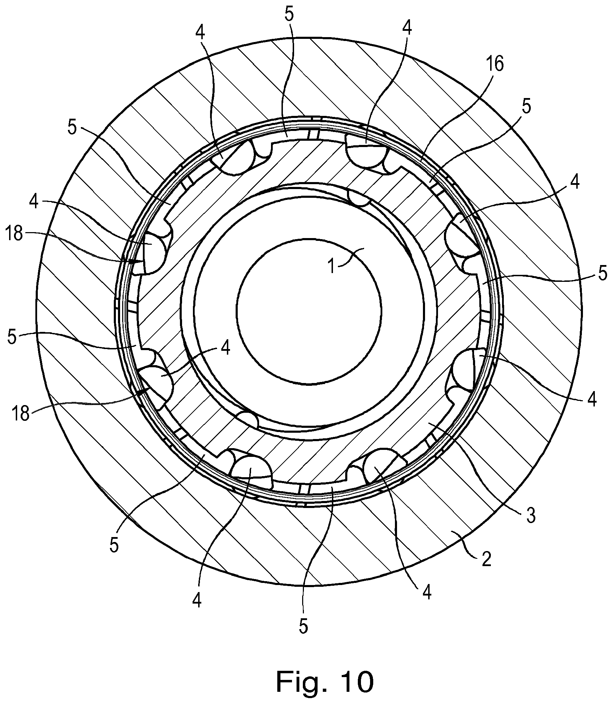

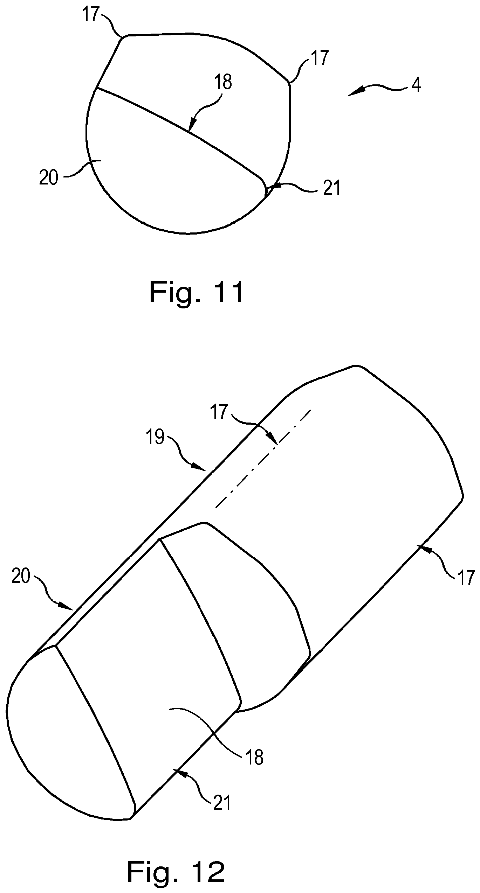

Figur 10 zeigt einen Querschnitt durch ein weiteres Ausführungsbeispiel der erfindungsgemäßen Drehmomentübertragungseinrichtung. Die Drehmomentübertragungseinrichtung ist grundsätzlich genauso aufgebaut wie die Drehmomentübertragungseinrichtung gemäß dem Ausführungsbeispiel aus den Figuren 1 bis 9. Bei dem in Figur 10 gezeigten Ausführungsbeispiel weist die Drehmomentübertragungseinrichtung zusätzlich ein Spannelement 16 auf, welches dazu ausgebildet ist, die Klemmelemente 4 bei der Überführung in die Sperrstellung zu unterstützen. Das Spannelement 16 ist ringförmig ausgestaltet und liegt an entsprechenden Auflageflächen 18 der Klemmelemente 4 an. Wie die Figuren 11 und 12 zeigen, ist die Auflagefläche 18 an einem axial von einem Grundkörper 19 des Klemmelements 4 abstehenden Vorsprung 20 ausgebildet. Das Spannelement ist elastisch ausgestaltet, sodass eine Spannkraft durch das Spannelement erzeugt wird. Durch Aufliegen des Spannelementes 16 an einem Punkt der Auflagefläche 18 kann somit eine Kraft bzw. ein Drehmoment auf das Klemmelement 4 erzeugt werden. Durch das Drehmoment werden die Klemmelemente 4 bei der Bewegung bzw. Überführung in die Sperrstellung unterstützt. Das Spannelement 16 kann bspw. aus einem elastischen Material wie Gummi oder Kautschuk gefertigt sein, durch welches die Spannkraft erzeugt wird. Das Spannelement 16 kann alternativ beispielsweise aus einem Federdraht gefertigt sein. Durch eine Spiralisierung eines Drahtes wird eine Wurmfeder erzeugt, welche ebenfalls die Spannkraft erzeugen kann. Die Klemmelemente 4 der Klemmsperre müssen gut gefettet sein. Dadurch kann es bei dem Ausführungsbeispiel gemäß den Figuren 1 bis 9 vorkommen, dass die Klemmelemente 4 in der gelösten Stellung haften bleiben und nicht durch die Relativbewegung zwischen der zweiten Eingangswelle 2 und der Abtriebswelle 3 sowie der Zentrifugalkraft und/oder der Gravitationskraft in die Sperrstellung rollen oder gleiten bzw. überführt werden. Durch das Spannelement 16 der Drehmomentübertragungseinrichtung gemäß dem zweiten Ausführungsbeispiel aus Figur 10 werden die Klemmelemente 4 bei der Überführung von der gelösten Stellung in die Sperrstellung jedoch unterstützt, sodass sämtliche Klemmelemente zuverlässig und schnell in die Sperrstellung gebracht werden.

Der Vorsprung 20 mit der Auflagefläche 18 steht ca. 1mm bis 10mm, vorzugsweise 2mm bis 5mm von dem Grundkörper 19 des Klemmelements 4 vor, sodass das Spannelement 16 gut aufliegen kann und nicht zu viel Bauraum für den Vorsprung 20 in der Klemmsperre beansprucht wird. Die Auflagefläche 18 erstreckt sich radial ungefähr gerade von einer Seite des Umfangs des Klemmelementes 4 zu der anderen Seite des Umfangs. Vorzugsweise verläuft die Auflagefläche 18 dabei ungefähr durch den Mittelpunkt, bei einem senkrecht zur Längsachse des Klemmelementes 4 verlaufenden Querschnitt. Dadurch kann durch die Auflagefläche 18 ein möglichst großes Drehmoment am Klemmelement 4 erzeugt werden. Die Auflagefläche 18 weist nahe am äußeren Umfang des Klemmelementes 4 eine Rundung 21 auf. Durch die Rundung 21 wird das Spannelement 16 beim Aufliegen auf der Auflagefläche 18 mechanisch weniger stark belastet als wenn das Spannelement 16 auf einer spitzen Kannte aufliegen würde.

Das in der Figur 10 gezeigte Spannelement 16 erzeugt eine zur gemeinsamen Achse 8 hin gerichtete Spannkraft. Bei dieser Anordnung sollte das Spannelement 16 gegen einen achsnahen Bereich des Klemmelementes 4 aufliegen. Bei dem achsnahen Bereich handelt es sich um denjenigen Bereich der Klemmelemente 4, der in Figur 1 betrachtet näher an der gemeinsamen Achse 8 der drei Wellen 1, 2 und 3 liegt. Der Vorsprung 20 bildet somit den achsnahen Bereich.

Es ist auch möglich durch ein Spannelement eine Spannkraft nach außen, von der gemeinsamen Achse 8 weg zu erzeugen. Bei einer solchen nicht dargestellten Anordnung sollte das Spannelement gegenüber einem achsfernen Bereich der Klemmelemente aufliegen.

Wie Figur 12 zeigt, weist das Klemmelement 4 einen Grundkörper mit einem kreisförmigen Querschnitt und zwei Ausbuchtungen 17 auf. Die Ausbuchtungen 17 vergrößern den Umfang des Klemmelementes 4 nach Art zweier Nocken, wodurch sich sowohl die Kraftübertragung als auch die Positionierung bzw. die Ausrichtung des Klemmelementes 4 zwischen der zweiten Eingangswelle 2 und der Abtriebswelle 3 verbessern.

### Bezugszeichenliste

- 1: erste Eingangswelle
- 2: zweite Eingangswelle
- 3: Abtriebswelle
- 4: Klemmelement
- 5: Entsperrelement
- 6: Kettenblatt
- 7: Kettenblattträger
- 8: Achse
- 9: erste Ausnehmung
- 10: zweite Ausnehmung
- 11: erste Klemmfläche
- 12: zweite Klemmfläche
- 13: Ritzel
- 14: Umfangsspiel
- 15: Antriebsdrehrichtung
- 16: Spannelement
- 17: Ausbuchtung
- 18: Auflagefläche
- 19: Grundkörper
- 20: Vorsprung
- 21: Rundung

## Patentansprüche

1. Drehmomentübertragungsanordnung für den Antriebsstrang eines muskelkraftbetriebenen Fahrzeugs mit Hilfsmotor,
mit einer Abtriebswelle (3),
einer ersten Eingangswelle (1) zur Übertragung eines mittels Muskelkraft erzeugten Drehmoments auf die Abtriebswelle (3),
einer zweiten Eingangswelle (2) zur Übertragung eines durch den Hilfsmotor erzeugten Drehmoments auf die Abtriebswelle (3),
und mit einer Freilauffunktion, durch die verhindert wird, dass ein Benutzer des muskelkraftbetriebenen Fahrzeugs den Hilfsmotor mitdrehen muss, wenn der Hilfsmotor ausgeschaltet ist,
**dadurch gekennzeichnet, dass** die Drehmomentübertragungsanordnung eine mechanische Kupplung aufweist, die dazu ausgebildet ist, ein Drehmoment von der zweiten Eingangswelle (2) auf die Abtriebswelle (3) zu übertragen, wenn an der ersten Eingangswelle (1) ein in einer Antriebsdrehrichtung (15) auf die Abtriebswelle (3) wirkendes Drehmoment anliegt, und kein Drehmoment von der zweiten Eingangswelle (2) auf die Abtriebswelle (3) zu übertragen, wenn an der ersten Eingangswelle (1) ein auf die Abtriebswelle (3) wirkendes Drehmoment entgegen der Antriebsdrehrichtung (15) anliegt.

2. Drehmomentübertragungsanordnung nach Anspruch 1, **dadurch gekennzeichnet, dass** die mechanische Kupplung eine Kupplung nach Art einer Klemmsperre ist, welche ohne elektrische Energieversorgung betreibbar ist.

3. Drehmomentübertragungsanordnung nach Anspruch 1 oder 2, **dadurch gekennzeichnet, dass** die Abtriebswelle (3), die erste Eingangswelle (1), und die zweite Eingangswelle (2) koaxial zueinander angeordnet und grundsätzlich gegeneinander drehbar gelagert sind, wobei zwischen der ersten Eingangswelle (1) und der Abtriebswelle (3) ein spielbehafteter mitnehmender Eingriff besteht, welcher im Rahmen eines gewissen Umfangsspiels (14) eine relative Drehung zwischen erster Eingangswelle (1) und Abtriebswelle (3) erlaubt,
wobei zumindest ein Klemmelement (4) nach Art einer Klemmsperre derart zwischen der zweiten Eingangswelle (2) und der Abtriebswelle (3) angeordnet ist, dass sich das Klemmelement (4) jedenfalls dann in einer gelösten Stellung befindet oder in die gelöste Stellung gebracht wird, wenn die Abtriebswelle (3) durch die erste Eingangswelle (1) in Antriebsdrehrichtung (15) gedreht wird und sich die zweite Eingangswelle (2) entweder nicht dreht oder sich langsamer in Antriebsdrehrichtung dreht als Abtriebswelle (3) und erste Eingangswelle (1),
wobei das Klemmelement (4) durch eine Relativdrehung zwischen Abtriebswelle (3) und zweiter Eingangswelle (2) aus der gelösten Stellung in eine Sperrstellung überführt wird, wenn sich die zweite Eingangswelle (2) kurzzeitig schneller in Antriebsdrehrichtung (15) dreht als die Abtriebswelle (3), so dass ein mitnehmender Eingriff zwischen zweiter Eingangswelle (2) und Abtriebswelle (3) hergestellt wird, wobei das Klemmelement (4) jedenfalls in der Sperrstellung verbleibt, solange sowohl über die erste Eingangswelle (1) als auch über die zweite Eingangswelle (2) ein in Antriebsdrehrichtung (15) wirkendes Drehmoment auf die Abtriebswelle (3) übertragen wird,
und wobei die erste Eingangswelle (1) ein Entsperrelement (5) aufweist, welches das Klemmelement (4) jedenfalls dann aktiv aus der Sperrstellung in die gelöste Stellung bewegt, wenn sich die erste Eingangswelle (1) durch das im Rahmen des zwischen erster Eingangswelle (1) und Abtriebswelle (3) bestehenden Umfangsspiels (14) relativ zur Abtriebswelle (3) betrachtet entgegen der Antriebsdrehrichtung (15) dreht.

4. Drehmomentübertragungsanordnung nach Anspruch 3, **dadurch gekennzeichnet, dass** das Klemmelement (4) ein Wälzkörper ist, der zwischen einer ersten Klemmfläche (11) der Abtriebswelle (3) und einer zweiten Klemmfläche (12) der zweiten Eingangswelle (2) angeordnet ist, wobei sich der Abstand zwischen erster Klemmfläche (11) und zweiter Klemmfläche (12) in Antriebsdrehrichtung (15) betrachtet derart verringert, dass in der Sperrstellung des Klemmelements (4) Selbsthemmung zwischen dem Klemmelement (4) und der ersten Klemmfläche (11) sowie der zweiten Klemmfläche (12) besteht.

5. Drehmomentübertragungsanordnung nach Anspruch 4, **dadurch gekennzeichnet, dass** das Klemmelement (4) eine Klemmrolle ist.

6. Drehmomentübertragungsanordnung nach Anspruch 4 oder 5, **dadurch gekennzeichnet, dass** das Klemmelement (4) zylindrisch oder kegelförmig ausgestaltet ist.

7. Drehmomentübertragungsanordnung nach Anspruch 6, **dadurch gekennzeichnet, dass** das Klemmelement (4) bei einem Schnitt senkrecht zur Längsachse des Klemmelementes (4) einen kreisförmigen Querschnitt oder einen kreisförmigen Querschnitt mit mindestens einer Ausbuchtung (17) aufweist.

8. Drehmomentübertragungsanordnung nach einem der Ansprüche 4 bis 7, **dadurch gekennzeichnet, dass** eine Rotationsachse des Klemmelementes parallel zu einer gemeinsamen Achse (8) von Abtriebswelle (3), erster Eingangswelle (1) und zweiter Eingangswelle (2) liegt.

9. Drehmomentübertragungsanordnung nach einem der Ansprüche 4 bis 8, **dadurch gekennzeichnet, dass** die erste Klemmfläche (11) und die zweite Klemmfläche (12) durch Kegelflächen gebildet sind, wobei ein mittlerer Radius der zweiten Klemmfläche (12) über den vollen Umfang der zweiten Eingangswelle (2) konstant ist, und wobei ein mittlerer Radius der ersten Klemmfläche (11) in Umfangsrichtung betrachtet variiert.

10. Drehmomentübertragungsanordnung nach einem der Ansprüche 4 bis 9, **dadurch gekennzeichnet, dass** das Klemmelement (4) in einer ersten Ausnehmung (9) der Abtriebswelle (3) aufgenommen ist, wobei die erste Klemmfläche (11) durch eine Teilfläche der ersten Ausnehmung (9) gebildet ist.

11. Drehmomentübertragungsanordnung nach Anspruch 10, **dadurch gekennzeichnet, dass** in Antriebsdrehrichtung (15) betrachtet im Anschluss an die erste Ausnehmung (9) eine zweite Ausnehmung (10) in der Abtriebswelle (3) ausgebildet ist, wobei das Entsperrelement (5) der ersten Eingangswelle (1) ein Zapfen ist, der in die zweite Ausnehmung (10) eingreift, wobei in Antriebsdrehrichtung (15) durch den Eingriff zwischen Zapfen und zweiter Ausnehmung (10) der mitnehmende Eingriff zwischen erster Eingangswelle (1) und Abtriebswelle (3) hergestellt wird, und wobei das Umfangsspiel (14) zwischen der ersten Eingangswelle (1) und der Abtriebswelle (3) dadurch gegeben ist, dass eine in Umfangsrichtung betrachtete kombinierte Ausdehnung von erster Ausnehmung (9) und zweiter Ausnehmung (10) größer ist als eine in Umfangsrichtung betrachtete kombinierte Ausdehnung des Klemmelements (4) und des Zapfens.

12. Drehmomentübertragungsanordnung nach einem der Ansprüche 1 bis 11, **dadurch gekennzeichnet, dass** die zweite Eingangswelle (2) die Abtriebswelle (3) koaxial umschließt.

13. Drehmomentübertragungsanordnung nach Anspruch 12, **dadurch gekennzeichnet, dass** die zweite Eingangswelle (2) als Tellerrad ausgeführt ist.

14. Drehmomentübertragungsanordnung nach einem der Ansprüche 1 bis 13, **dadurch gekennzeichnet, dass** sich die erste Eingangswelle (1) durch die Abtriebswelle (3) hindurch erstreckt.

15. Drehmomentübertragungsanordnung nach einem der Ansprüche 1 bis 14, **dadurch gekennzeichnet, dass** die Drehmomentübertragungsanordnung mehrere Klemmelemente (4) aufweist, die in Umfangsrichtung verteilt angeordnet sind.

16. Drehmomentübertragungsanordnung nach einem der Ansprüche 1 bis 15, **dadurch gekennzeichnet, dass** die Klemmsperre ein ringförmiges Spannelement (16) aufweist, welches dazu ausgebildet ist, die Klemmelemente (4) bei der Überführung in die Sperrstellung zu unterstützen.

17. Fahrrad mit einem Hilfsmotor und einer Drehmomentübertragungsanordnung nach einem der Ansprüche 1 bis 16, wobei der Hilfsmotor als Mittelmotor ausgeführt und mit der zweiten Eingangswelle (2) gekoppelt ist.

## Claims

1. A torque transmission assembly for the drive train of a muscle power operated vehicle with an auxiliary motor,
having an output shaft (3),
a first input shaft (1) for transmitting a torque produced by muscle power to the output shaft (3),
a second input shaft (2) for transmitting a torque produced by the auxiliary motor to the output shaft (3),
and having a freewheel function by means of which a user of the muscle power operated vehicle does not have to pedal along with the auxiliary motor when the auxiliary motor is deactivated,
**characterized in that** the torque transmission assembly has a mechanical clutch which is configured to transmit a torque from the second input shaft (2) to the output shaft (3) when, at the first input shaft (1), a torque which acts in a driven direction of rotation (15) is applied to the output shaft (3), and not to transmit a torque from the second input shaft (2) to the output shaft (3) when, at the first input shaft (1), a torque which acts against the driven direction of rotation (15) is applied to the output shaft (3).

2. The torque transmission assembly as claimed in claim 1, **characterized in that** the mechanical clutch is a clutch of the ratchet brake type which can be operated without supplying electrical energy.

3. The torque transmission assembly as claimed in claim 1 or claim 2, **characterized in that** the output shaft (3), the first input shaft (1) and the second input shaft (2) are disposed coaxially with respect to each other and in principle are rotatably mounted against each other, wherein between the first input shaft (1) and the output shaft (3) there is an entraining engagement with a clearance which permits relative rotation between the first input shaft (1) and the output shaft (3) within a specific circumferential clearance (14),
wherein at least one ratchet element (4) of the ratchet brake type is disposed between the second input shaft (2) and the output shaft (3) in a manner such that in all cases, the ratchet element (4) is in a disengaged position or is brought into the disengaged position when the output shaft is turned by the first input shaft (1) in the driven direction of rotation (15) and the second input shaft (2) either does not turn or turns more slowly in the driven direction of rotation than the output shaft (3) and first input shaft (1), wherein the ratchet element (4) is moved out of the disengaged position into a locked position by a relative rotation between the output shaft (3) and the second input shaft (2) when the second input shaft 92) briefly turns faster in the driven direction of rotation (15) than the output shaft (3), so that an entraining engagement is established between the second input shaft (2) and the output shaft (3), wherein in all cases, the ratchet element (4) remains in the locked position as long as a torque acting in the driven direction of rotation (15) is transmitted to the output shaft (3) via both the first input shaft (1) and via the second input shaft (2),
and wherein the first input shaft (1) has an unlocking element (5) which in all cases then actively moves the ratchet element (4) from the locked position into the disengaged position when the first input shaft (1) turns against the driven direction of rotation (15) relative to the output shaft (3) within the circumferential clearance (14) between the first input shaft (1) and the output shaft (3).

4. The torque transmission assembly as claimed in claim 3, **characterized in that** the ratchet element (4) is a roller element which is disposed between a first clamping surface (11) of the output shaft (3) and a second clamping surface (12) of the second input shaft (2), wherein the distance between the first clamping surface (11) and the second clamping surface (12) is reduced when considered in the driven direction of rotation (15) in a manner such that in the locked position of the ratchet element (4), self-locking occurs between the ratchet element (4) and the first clamping surface (11) as well as the second clamping surface (12).

5. The torque transmission assembly as claimed in claim 4, **characterized in that** the ratchet element (4) is a clamping roller.

6. The torque transmission assembly as claimed in claim 4 or claim 5, **characterized in that** the ratchet element (4) is cylindrical or conical in shape.

7. The torque transmission assembly as claimed in claim 6, **characterized in that** in a section perpendicular to the longitudinal axis of the ratchet element (4), the ratchet element (4) has a circular cross section or a circular cross section with at least one prominence (17).

8. The torque transmission assembly as claimed in one of claims 4 to 7, **characterized in that** an axis of rotation of the ratchet element is parallel to a common axis (8) of the output shaft (3), first input shaft (1) and second input shaft (2).

9. The torque transmission assembly as claimed in one of claims 4 to 8, **characterized in that** the first clamping surface (11) and the second clamping surface (12) are formed by conical surfaces, wherein a median radius of the second clamping surface (12) is constant over the entire circumference of the second input shaft (2), and wherein a median radius of the first clamping surface (11) varies when considered in the circumferential direction.

10. The torque transmission assembly as claimed in one of claims 4 to 9, **characterized in that** the ratchet element (4) is received in a first recess (9) of the output shaft (3), wherein the first clamping surface (11) is formed by a subarea of the first recess (9).

11. The torque transmission assembly as claimed in claim 10, **characterized in that** when considered in the driven direction of rotation (15), a second recess (10) is formed in the output shaft (3) which is contiguous with the first recess (9), wherein the unlocking element (5) of the first input shaft (1) is a peg which engages with the second recess (10), wherein the entraining engagement between the first input shaft (1) and the output shaft (3) is established in the driven direction of rotation (15) by means of the engagement between the peg and the second recess (10), and wherein the circumferential clearance (14) between the first input shaft (1) and the output shaft (3) is generated by the fact that a combined extent of the first recess (9) and the second recess (10) considered in the circumferential direction is larger than a combined extent of the ratchet element (4) and the peg considered in the circumferential direction.

12. The torque transmission assembly as claimed in one of claims 1 to 11, **characterized in that** the second input shaft (2) coaxially surrounds the output shaft (3).

13. The torque transmission assembly as claimed in claim 12, **characterized in that** the second input shaft (2) is configured as a crown wheel.

14. The torque transmission assembly as claimed in one of claims 1 to 13, **characterized in that** the first input shaft (1) extends through the output shaft (3).

15. The torque transmission assembly as claimed in one of claims 1 to 14, **characterized in that** the torque transmission assembly has a plurality of ratchet elements (4) which are distributed in the circumferential direction.

16. The torque transmission assembly as claimed in one of claims 1 to 15, **characterized in that** the ratchet brake has an annular tensioning element (16) which is configured in a manner such as to support the ratchet element (4) when moving into the locked position.

17. A bicycle with an auxiliary motor and a torque transmission assembly as claimed in one of claims 1 to 16, wherein the auxiliary motor is configured as a mid-mounted motor and is coupled to the second input shaft (2).

## Revendications

1. Agencement de transmission de couple destiné à la chaîne cinématique d'un véhicule à propulsion musculaire muni d'un moteur auxiliaire,
avec un arbre de sortie (3),
un premier arbre d'entrée (1) permettant de transmettre à l'arbre de sortie (3) un couple généré au moyen d'une force musculaire,
un second arbre d'entrée (2) permettant de transmettre à l'arbre de sortie (3) un couple généré grâce au moteur auxiliaire,
et avec une fonction de roue libre grâce à laquelle un utilisateur du véhicule à propulsion musculaire n'a pas à faire tourner le moteur auxiliaire lorsque le moteur auxiliaire est éteint,
**caractérisé en ce que** l'agencement de transmission de couple présente un couplage mécanique conçu pour transmettre un couple du second arbre d'entrée (2) à l'arbre de sortie (3) si un couple agissant sur l'arbre de sortie (3) dans un sens de rotation d'entraînement (15) est appliqué au niveau du premier arbre d'entrée (1), et pour ne transmettre aucun couple du second arbre d'entrée (2) à l'arbre de sortie (3) si un couple agissant sur l'arbre de sortie (3) est appliqué au niveau du premier arbre d'entrée (1) à l'encontre du sens de rotation d'entraînement (15).

2. Agencement de transmission de couple selon la revendication 1, **caractérisé en ce que** le couplage mécanique est un couplage à la manière d'un verrou de serrage pouvant être actionné sans alimentation en énergie électrique.

3. Agencement de transmission de couple selon la revendication 1 ou 2, **caractérisé en ce que** l'arbre de sortie (3), le premier arbre d'entrée (1) et le second arbre d'entrée (2) sont agencés de manière coaxiale l'un par rapport à l'autre et sont montés de manière essentiellement contrarotative, dans lequel un engrènement d'entraînement avec jeu, permettant une rotation relative entre le premier arbre d'entrée (1) et l'arbre de sortie (3) avec un certain jeu circonférentiel (14), est constitué entre le premier arbre d'entrée (1) et l'arbre de sortie (3),
dans lequel au moins un élément de serrage (4) à la manière d'un verrou de serrage est agencé entre le second arbre d'entrée (2) et l'arbre de sortie (3) de telle manière que l'élément de serrage (4) se trouve ensuite dans tous les cas dans une position de libération ou est amené dans la position de libération lorsque l'arbre de sortie (3) est mis en rotation dans le sens de rotation d'entraînement (15) par le premier arbre d'entrée (1) et lorsque le second arbre d'entrée (2) ne tourne pas ou tourne dans le sens de rotation d'entraînement plus lentement que l'arbre de sortie (3) et le premier arbre d'entrée (1),
dans lequel l'élément de serrage (4) est amené de la position de libération à une position de verrouillage grâce à une rotation relative entre l'arbre de sortie (3) et le second arbre d'entrée (2) lorsque le second arbre d'entrée (2) tourne brièvement dans le sens de rotation d'entraînement (15) plus rapidement que l'arbre de sortie (3), de sorte qu'un engrènement d'entraînement est établi entre le second arbre d'entrée (2) et l'arbre de sortie (3), dans lequel l'élément de serrage (4) reste dans tous les cas dans la position de verrouillage aussi longtemps qu'un couple agissant dans le sens de rotation d'entraînement (15) est transmis à l'arbre de sortie (3), aussi bien par l'intermédiaire du premier arbre d'entrée (1) que par l'intermédiaire du second arbre d'entrée (2),
et dans lequel le premier arbre d'entrée (1) présente un élément de déverrouillage (5) qui dans tous les cas déplace ensuite de manière active l'élément de serrage (4) de la position de verrouillage vers la position de libération lorsque le premier arbre d'entrée (1) tourne à l'encontre du sens de rotation d'entraînement (15), considéré par rapport à l'arbre de sortie (3), grâce au jeu circonférentiel (14) constitué entre le premier arbre d'entrée (1) et l'arbre de sortie (3).

4. Agencement de transmission de couple selon la revendication 3, **caractérisé en ce que** l'élément de serrage (4) est un organe de roulement agencé entre une première surface de serrage (11) de l'arbre de sortie (3) et une seconde surface de serrage (12) du second arbre d'entrée (2), dans lequel la distance entre la première surface de serrage (11) et la seconde surface de serrage (12), considérée dans le sens de rotation d'entraînement (15), se réduit de telle manière qu'un blocage automatique entre l'élément de serrage (4) et la première surface de serrage (11) et la seconde surface de serrage (12) est constitué dans la position de verrouillage de l'élément de serrage (4).

5. Agencement de transmission de couple selon la revendication 4, **caractérisé en ce que** l'élément de serrage (4) est un rouleau de serrage.

6. Agencement de transmission de couple selon la revendication 4 ou 5, **caractérisé en ce que** l'élément de serrage (4) présente une forme cylindrique ou conique.

7. Agencement de transmission de couple selon la revendication 6, **caractérisé en ce que** l'élément de serrage (4), en coupe perpendiculaire à l'axe longitudinal de l'élément de serrage (4), présente une section transversale circulaire ou une section transversale circulaire avec au moins un renflement (17).

8. Agencement de transmission de couple selon l'une quelconque des revendications 4 à 7, **caractérisé en ce qu'**un axe de rotation de l'élément de serrage est parallèle à un axe commun (8) de l'arbre de sortie (3), du premier arbre d'entrée (1) et du second arbre d'entrée (2).

9. Agencement de transmission de couple selon l'une quelconque des revendications 4 à 8, **caractérisé en ce que** la première surface de serrage (11) et la seconde surface de serrage (12) sont formées de surfaces coniques, dans lequel un rayon moyen de la seconde surface de serrage (12) est constant sur la circonférence complète du second arbre d'entrée (2), et dans lequel un rayon moyen de la première surface de serrage (11) varie lorsqu'il est considéré dans la direction circonférentielle.

10. Agencement de transmission de couple selon l'une quelconque des revendications 4 à 9, **caractérisé en ce que** l'élément de serrage (4) est accueilli dans un premier évidement (9) de l'arbre de sortie (3), dans lequel la première surface de serrage (11) est formée d'une surface partielle du premier évidement (9).

11. Agencement de transmission de couple selon la revendication 10, **caractérisé en ce que**, considéré dans le sens de rotation d'entraînement (15), un second évidement (10) présent dans l'arbre de sortie (3) est formé à la suite du premier évidement (9), dans lequel l'élément de déverrouillage (5) du premier arbre d'entrée (1) est une broche qui vient en prise dans le second évidement (10), dans lequel l'engrènement d'entraînement est créé entre le premier arbre d'entrée (1) et l'arbre de sortie (3) dans le sens de rotation d'entraînement (15) grâce à l'engrènement entre broche et second évidement (10), et dans lequel le jeu circonférentiel (14) entre le premier arbre d'entrée (1) et l'arbre de sortie (3) est fourni grâce au fait qu'une extension combinée, considérée dans la direction circonférentielle, du premier évidement (9) et du second évidement (10) est supérieure à une extension combinée, considérée dans la direction circonférentielle, de l'élément de serrage (4) et de la broche.

12. Agencement de transmission de couple selon l'une quelconque des revendications 1 à 11, **caractérisé en ce que** le second arbre d'entrée (2) entoure l'arbre de sortie (3) de manière coaxiale.

13. Agencement de transmission de couple selon la revendication 12, **caractérisé en ce que** le second arbre d'entrée (2) est réalisé sous forme de couronne.

14. Agencement de transmission de couple selon l'une quelconque des revendications 1 à 13, **caractérisé en ce que** le premier arbre d'entrée (1) s'étend à travers l'arbre de sortie (3).

15. Agencement de transmission de couple selon l'une quelconque des revendications 1 à 14, **caractérisé en ce que** l'agencement de transmission de couple présente plusieurs éléments de serrage (4) agencés de manière répartie dans la direction circonférentielle.

16. Agencement de transmission de couple selon l'une quelconque des revendications 1 à 15, **caractérisé en ce que** le verrou de serrage présente un élément de mise en tension annulaire (16) conçu pour supporter les éléments de serrage (4) lorsqu'ils sont amenés dans la position de verrouillage.

17. Bicyclette avec un moteur auxiliaire et un agencement de transmission de couple selon l'une quelconque des revendications 1 à 16, dans laquelle le moteur auxiliaire est mis en œuvre en tant que moteur central et est couplé au second arbre d'entrée (2).
